# EUROPEAN PATENT APPLICATION

(11) **EP 4 542 894 A1**
(43) Date of publication of application: **23.04.2025**
(21) Application number: 23838614.8
(22) Date of filing: 12.06.2023
(51) Int. Cl.: H04L 1/00

(54) **DATA TRANSMISSION METHOD AND APPARATUS, AND ELECTRONIC DEVICE AND COMPUTER-READABLE MEDIUM**

(30) Priority: 15.07.2022 CN 202210830970
(71) Applicant: ZTE Corporation, Shenzhen, Guangdong 518057 (CN)
(72) Inventor: YUAN, Yan, Shenzhen, Guangdong 518057 (CN)
(74) Representative: Canzler & Bergmeier Patentanwälte Partnerschaft mbB
(86) International application number: PCT/CN2023/099627
(87) International publication number: WO 2024/012120

(57) **Abstract**

Provided in the present disclosure is a data transmission method. The method comprises: converting a 64B/66B coding signal into an mB/(m+1)B coding signal, wherein the 64B/66B coding signal is composed of 64B/66B coding blocks, and the mB/(m+1)B coding signal is composed of mB/(m+1)B coding blocks, m being an integer greater than or equal to 64; encapsulating the mB/(m+1)B signal into a service signal, wherein the service signal carries an offset overhead, and the offset overhead stores location information of a specified mB/(m+1)B coding block in the mB/(m+1)B coding signal; and sending the service signal. Further provided in the present disclosure are a data transmission apparatus, an electronic device, and a computer-readable medium.

## Description

### TECHNICAL FIELD

The present disclosure relates to the field of communications technologies, and in particular, to a data transmission method, a data transmission apparatus, an electronic device, and a computer-readable medium.

### BACKGROUND

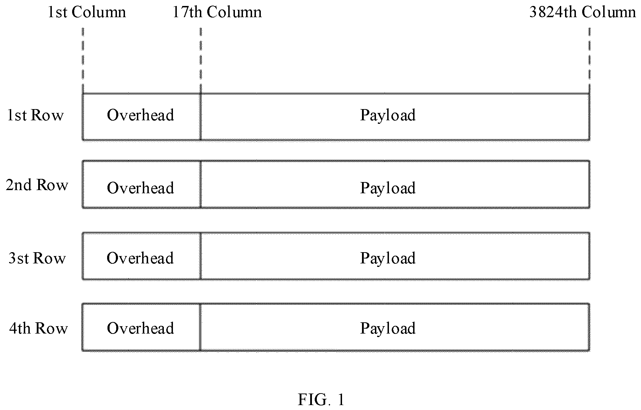

64B/66B coding is a Physical Coding Sublayer (PCS) coding specified by the IEEE802.3 standard, and used for converting a packet signal into a signal with a fixed rate while recognizing a data packet and control information in the packet signal. The control information includes a header and a trailer of the data packet of the packet signal, and includes idle control information for implementing rate padding, Local Fault control information and Remote Fault control information for indicating a special state of the signal, and the like. A 64B/66B coded signal is composed of 64B/66B coding blocks, the 64B/66B coded signal with fixed rate may be loaded into an Optical Channel Data Unit (ODU) signal of an Optical Transport Network (OTN) through Bit-synchronous Mapping Procedure (BMP). In the BMP, a rate of the 64B/66B coded signal is equal to that of a payload of the ODU. The ODU signal is a fixed-length frame signal and is composed of ODU signal frames. The ODU signal frame is composed of 4×3824 bytes, which are arranged into 4 rows and 3824 columns, where bytes from 1st column to 16th column are overhead, bytes from 17th column to 3824th column are payload, and a structure of the ODU signal frame is as shown in Fig. 1.

The fixed-length frame signal refers to a signal composed of signal frames having a fixed value of length. The signal frame includes an overhead and a payload, the overhead is used for transmitting management information of the signal, and the payload is used for loading data information to be transmitted. Common fixed-length frame signals include flexible Ethernet (FlexE) signals, Optical Service Unit (OSU) signals, ODU signals, and the like. The opposite of the fixed-length frame signal is a variable-length frame signal. For simplicity of description, the fixed-length frame signal and the variable-length frame signal capable of loading into the 64B/66B coded signal are uniformly referred to as service signal. The 64B/66B coded signal with fixed rate is loaded into the fixed-length frame signal by BMP. For example, a name of a physical layer signal of 10G Ethernet is 10GBASE-R, and the signal is a 64B/66B coded signal with a rate of 10.3125 Gbps. In the OTN, the 10GBASE-R signal is loaded into a ODU2e signal by BMP, a payload of the ODU2e signal includes some fixed padding information, so a rate of the payload of the ODU2e signal is exactly equal to a rate of the 10GBASE-R signal*238/237, where 238/237 represents a rate occupied by the fixed padding information, and a rate after removing the rate occupied by the fixed padding information from the rate of the payload of the ODU2e signal is equal to the rate of the 10GBASE-R signal. The 64B/66B coded signal may also be loaded into a fixed-length frame signal by other mapping manners, for example, the 64B/66B coded signal may be loaded into a FlexE Client signal by an Idle Mapping Procedure (IMP), 100G Ethernet physical layer signal (100GBASE-R) is a 64B/66B coded signal with a rate of 103.125G, and may be loaded into an ODU4 signal by a Generic Mapping Procedure (GMP).

First two bits of the 64B/66B coding block are synchronization bits, and one of main functions of the synchronization bits is to identify the 64B/66B coded signal from the bit stream. Specifically, after the 64B/66B coded signal is transmitted as the bit stream through a physical layer, a receiving terminal receives a bit stream signal, and at this time, it is necessary to find a specific position of the synchronization bits of the 64B/66B coding block, and this procedure is called synchronization. Redundant information actually exists in the 64B/66B coding block, for example, the 64B/66B coding block may be converted into a 64B/65B coding block or a 256B/257B coding block, and a part of the redundant information is removed during the conversion procedure. However, the coding block removed the redundant information may not be positioned accurately in the bit stream. Since the coding block removed the redundant information has no synchronization function, the coding block removed redundant information cannot be directly loaded into the service signal.

### SUMMARY

The present disclosure provides a data transmission method, a data transmission apparatus, an electronic device and a computer-readable medium. The present disclosure aims to realize loading coding blocks removed redundant information into a service signal, so that a signal rate of the service signal can be reduced.

In a first aspect, the present disclosure provides a data transmission method, including: converting a 64B/66B coded signal into a mB/(m+1)B coded signal, where the 64B/66B coded signal is composed of 64B/66B coding blocks, the mB/(m+1)B coded signal is composed of mB/(m+1)B coding blocks, m is an integer greater than or equal to 64; loading the mB/(m+1)B coded signal into a service signal, where the service signal carries an offset overhead, and the offset overhead stores position information of a designated mB/(m+1)B coding block in the mB/(m+1)B coded signal; and transmitting the service signal.

In some implementations, the service signal is composed of signal frames, and the signal frame of the service signal includes an overhead and a payload; loading the mB/(m+1)B coded signal into the service signal includes: loading the mB/(m+1)B coded signal into the payload of the signal frame; defining the offset overhead in the overhead of the signal frame, and storing the position information of the designated mB/(m+1)B coding block in the offset overhead.

In some implementations, storing the position information of the designated mB/(m+1)B coding block in the offset overhead includes: storing, in the offset overhead, a bit offset value U in the mB/(m+1)B coding block of a first bit of the mB/(m+1)B coded signal located in the payload of the signal frame, where U is an integer and a value range of U is from 1 to m+1.

In some implementations, loading the mB/(m+1)B coded signal into the payload of the signal frame includes: loading the mB/(m+1)B coded signal into the payload of the signal frame, where all bits in the payload of the signal frame are used for loading the mB/(m+1)B coded signal, and a rate of the payload of the signal frame is equal to that of the mB/(m+1)B coded signal.

In some implementations, loading the mB/(m+1)B coded signal into the payload of the signal frame includes: loading the mB/(m+1)B coded signal into non-padding bits in the payload of the signal frame, where the payload of the signal frame includes padding bits and the non-padding bits, and a rate of the non-padding bits in the payload of the signal frame is equal to that of the mB/(m+1)B coded signal.

In some implementations, the mB/(m+1)B coded signal is a 64B/65B coded signal, the 64B/65B coded signal is composed of 64B/65B coding blocks, and a length of the 64B/65B coding block is 65 bits; converting the 64B/66B coded signal into the 64B/65B coded signal includes: taking 65 bits of specific positions from the 64B/66B coding block to compose the 64B/65B coding block, so as to convert the 64B/66B coded signal into the 64B/65B coded signal.

In some implementations, taking the 65 bits of specific positions from the 64B/66B coding block to compose the 64B/65B coding block includes: taking last 65 bits of the 64B/66B coding block to compose the 64B/65B coding block; or removing a second bit of the 64B/66B coding block and composing the 64B/65B coding block by the remaining 65 bits.

In some implementations, the mB/(m+1)B coded signal is a 256B/257B coded signal, the 256B/257B coded signal is composed of 256B/257B coding blocks, and a length of the 256B/257B coding block is 257 bits; converting the 64B/66B coded signal into the 256B/257B coded signal includes: converting four consecutive 64B/66B coding blocks into one 256B/257B coding block, so as to convert the 64B/66B coded signal into the 256B/257B coded signal.

In some implementations, converting four consecutive 64B/66B coding blocks into one 256B/257B coding block includes: in response to first two bits of each of the four 64B/66B coding blocks being 01, setting a first bit of the 256B/257B coding block as 1, and sequentially splicing last 64 bits of respective 64B/66B coding blocks as last 256 bits of the 256B/257B coding block; in response to first two bits of at least one 64B/66B coding block of the four 64B/66B coding blocks being 10, setting the first bit of the 256B/257B coding block as 0, and sequentially taking second bits of the four 64B/66B coding blocks as second to fifth bits of the 256B/257B coding block, and sequentially splicing last 64 bits of respective 64B/66B coding blocks as a bit block including 256 bits; removing [5+64×(C-1)]-th to [8+64×(C-1)]-th bits from the bit block, and taking the remaining 252 bits as last 252 bits of the 256B/257B coding block, where C represents a position of a first 64B/66B coding block having the first two bits as 10 in the four 64B/66B coding blocks, and C is an integer with a value from 1 to 4.

In some implementations, the data transmission method further includes: receiving the service signal; determining, according to the offset overhead carried in the service signal, the position information of the designated mB/(m+1)B coding block in the mB/(m+1)B coded signal; extracting the mB/(m+1)B coded signal from the service signal; and converting the extracted mB/(m+1)B coded signal into the 64B/66B coded signal.

In a second aspect, the present disclosure provides a data transmission apparatus, including: a transmission module configured to convert a 64B/66B coded signal into a mB/(m+1)B coded signal, where the 64B/66B coded signal is composed of 64B/66B coding blocks, the mB/(m+1)B coded signal is composed of mB/(m+1)B coding blocks, m is an integer greater than or equal to 64; load the mB/(m+1)B coded signal into a service signal, where the service signal carries an offset overhead, and the offset overhead stores position information of a designated mB/(m+1)B coding block in the mB/(m+1)B coded signal; and transmit the service signal; and a receiving module configured to receive the service signal; determine, according to the offset overhead carried in the service signal, the position information of the designated mB/(m+1)B coding block in the mB/(m+1)B coded signal; extract the mB/(m+1)B coded signal from the service signal; and convert the extracted mB/(m+1)B coded signal into the 64B/66B coded signal.

In a third aspect, the present disclosure provides an electronic device, including: at least one processor; a memory having at least one program stored thereon, the at least one program, executed by the at least one processor, causes the at least one processor to implement the data transmission method described in the first aspect of the present disclosure.

In a fourth aspect, the present disclosure provides a computer-readable medium having a computer program stored thereon, the computer program, executed by a processor, causes the processor to implement the data transmission method described in the first aspect of the present disclosure.

In the present disclosure, a transmission terminal converts the 64B/66B coded signal into the mB/(m+1)B coded signal, and loads the mB/(m+1)B coded signal into the service signal for transmission. Compared with directly loading the 64B/66B coded signal into the service signal, the rate of the service signal is lower, so that the rate of the service signal is reduced. At a receiving terminal, according to the offset overhead stored the position information of the designated mB/(m+1)B coding block in the mB/(m+1)B coded signal in the service signal, the mB/(m+1)B coded signal can be extracted from the service signal, and the mB/(m+1)B coded signal is converted into the 64B/66B coded signal, so that the transmission of the 64B/66B coded signal can be realized, and when the 64B/66B coded signal is recovered according to the mB/(m+1)B coded signal, the transmission rate of the 64B/66B coded signal can also be recovered, so that a high-rate 64B/66B coded signal can be transmitted by a low-rate service signal, a bandwidth of the service signal is saved, and hardware implementation cost is reduced.

### BRIEF DESCRIPTION OF DRAWINGS

Fig. 1 is a schematic structural diagram of an ODU signal frame;
Fig. 2 is a schematic diagram of a definition of a 64B/66B coding block;
Fig. 3 is a flowchart of a data transmission method according to the present disclosure;
Fig. 4 is a flowchart of some operations of a data transmission method according to the present disclosure;
Fig. 5 is a flowchart of some operations of a data transmission method according to the present disclosure;
Fig. 6 is a block diagram of a data transmission apparatus according to the present disclosure;
Fig. 7 is a block diagram of an electronic device according to the present disclosure;
Fig. 8 is a block diagram of a computer-readable medium according to the present disclosure; and
Fig. 9 is a schematic diagram of an offset overhead according to the present disclosure.

### DETAIL DESCRIPTION OF EMBODIMENTS

In order to make those skilled in the art better understand the technical solutions of the present disclosure, a data transmission method, a data transmission apparatus, an electronic device, and a computer-readable medium, provided in the present disclosure, are described in detail below with reference to the accompanying drawings.

Exemplary embodiments are described in detail below with reference to the accompanying drawings, but the exemplary embodiments may be embodied in different forms, and the present disclosure should not be construed as limited to the embodiments set forth herein. In contrast, the embodiments are illustrated to make the present disclosure more thorough and complete, and for those skilled in the art more fully understanding the scope of the present disclosure.

Each of the embodiments of the present disclosure and each technical feature in the embodiments may be combined with each other if no conflict is incurred.

As used in the present disclosure, a term "and/or" includes any and all combinations of at least one of listed items.

The terms used in the present disclosure are for a purpose of describing particular embodiments only, and are not intended to limit the present disclosure. As used in the present disclosure, singular forms "a" and "the" include plural forms as well, unless the context clearly defines otherwise. It should further be understood that terms "includes/comprises" and/or "made of/consisted of" in the present disclosure are used to specify a presence of at least one of recited features, integers, steps, operations, elements or components, but do not preclude a presence or an addition of at least one of other features, integers, steps, operations, elements, components or groups thereof.

Unless otherwise defined, meanings of all terms (including technical terms and scientific terms) used herein are the same as meanings commonly understood by one of ordinary skills in the art. It should further be understood that terms, such as those defined in common dictionaries, should be construed as having a meaning that is consistent with that in background of the existing art and the present disclosure, and should not be construed as having an idealized or over-formal meaning, unless expressly defined in the present disclosure.

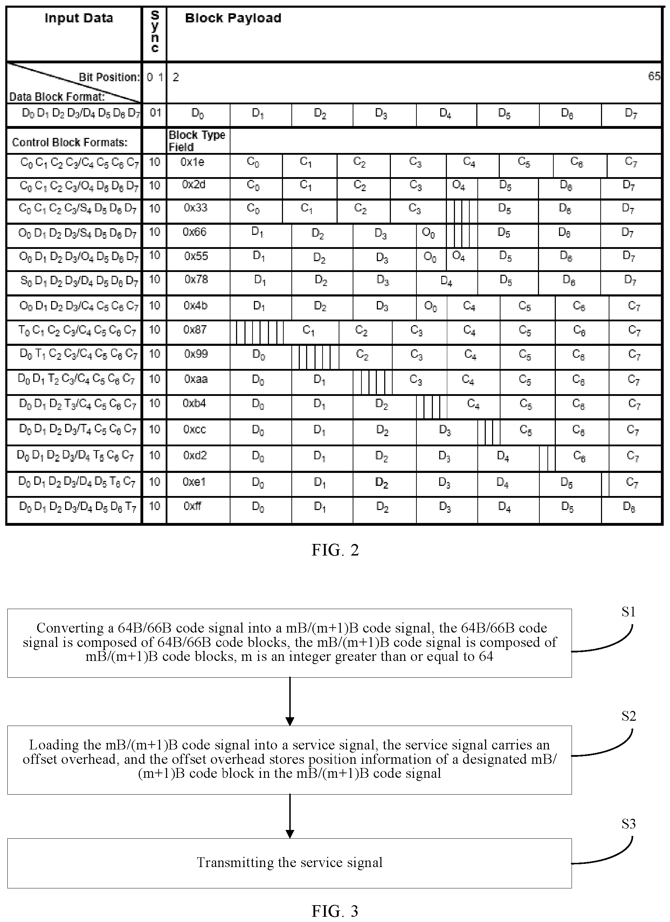

A 64B/66B coded signal consists of 64B/66B coding blocks with a length of 66 bits, and a definition of the 64B/66B coding block is shown in Fig. 2. First two bits in the 64B/66B coding block are synchronization bits and denoted as Sync in Fig. 2. If the synchronization bits are 01, the 64B/66B coding block is a data block, and last 64 bits are data in a data packet of a packet signal; if the synchronization bits are 10, the 64B/66B coding block is a control block, and last 64 bits at least include 7 bits of control information, how much control information, how much data information, and content of the control information and the data information being included are specifically determined by content from 3rd to 10th bits in the 64B/66B coding block. When the synchronization bits are 10, the 3rd to 10th bits in the 64B/66B coding block are named as a block type field, and as shown in Fig. 2, the block type field defines 15 values currently.

A synchronization procedure of the 64B/66B coded signal is as follows: 64 66-bit blocks with a length of 66 bits are consecutively taken out from a bit stream, and then check whether first two bits of each 66-bit block are 01 or 10; for any 66-bit block, if the first two bits are 01 or 10, a detection result of the 66-bit block is considered as matching, otherwise, the detection result of the 66-bit block is considered as mismatching; if the detection results of the 64 66-bit blocks are all considered as matching, synchronization headers of the current 64 66-bit blocks are considered as the first two bits of each 66-bit block; otherwise, check whether 2nd and 3rd bits of the above 64 66-bit blocks are 01 or 10, if 64 detection results are all considered as matching, synchronization headers of the current 64 66-bit blocks are considered as the 2nd and 3rd bits, otherwise, check whether 3rd and 4th bits of the above 64 66-bit blocks are 01 or 10 ...... and such detection is executed 66 times at most, if a legal 64B/66B coded signal is in the bit stream actually, positions of synchronization bits can be found certainly. If the synchronization bits are reduced from 2 bits to 1 bit, i.e., the synchronization bits 01 are converted to 0, and the synchronization bits 10 are converted to 1, the 64B/66B coding block can be converted into a 64B/65B coding block, but 1 synchronization bit does not have synchronization function, for example, a bit stream of 64×65 all-0 bits is also considered as legal 64B/65B coding blocks, thereby causing a data identification error.

When the 64B/66B coded signal is loaded into the service signal, if the 64B/66B coding block is converted into the 64B/65B coding block, a rate of the service signal can be reduced, thereby saving the bandwidth of the service signal and reducing the hardware implementation cost. However, when the bit stream is transmitted at the physical layer, consecutive 0 bits or consecutive 1 bits are easily caused due to fault, and reducing the synchronization bit from 2 bits to 1 bit may not guarantee that some obviously erroneous signals are not mistaken for legal signals.

In view of above, in a first aspect, referring to Fig. 3, a data transmission method includes the following operations S1 to S3.

At operation S1, converting a 64B/66B coded signal into a mB/(m+1)B coded signal, where the 64B/66B coded signal is composed of 64B/66B coding blocks, the mB/(m+1)B coded signal is composed of mB/(m+1)B coding blocks, m is an integer greater than or equal to 64.

At operation S2, loading the mB/(m+1)B coded signal into a service signal, where the service signal carries an offset overhead, and the offset overhead stores position information of a designated mB/(m+1)B coding block in the mB/(m+1)B coded signal.

At operation S3, transmitting the service signal.

In the present disclosure, a length of the 64B/66B coding block is 66 bits, and a length of the mB/(m+1)B coding block is m+1 bits, m is an integer greater than or equal to 64. In a case of carrying same content of bits, a desired total number of bits of the mB/(m+1)B coding block is less than a desired total number of bits of the 64B/66B coding block. For example, the mB/(m+1)B coded signal is a 64B/65B coded signal, and the 64B/65B coding block actually carry as much effective information as the 64B/66B coding block, i.e., 64 bits of effective information are to be carried, the 64B/66B coding block needs 66 bits, and the 64B/65B coding block needs 65 bits. In particular, the synchronization function desires redundant information, and the 64B/65B coding block reduces an actual number of bits by dropping the synchronization function. For example, the mB/(m+1)B coded signal is a 256B/257B coded signal, four 64B/66B coding blocks are converted into one 256B/257B coding block, i.e., 256 bits of effective information are to be carried, four 64B/66B coding blocks need totaling 264 bits, and the 256B/257B coding block needs 257 bits. Specifically, the 256B/257B coding block not only abandons the synchronization function, but also discards redundant information including control information in the 64B/66B coding block, i.e., a block type field of a 64B/66B coding block with synchronization bits 10 has less than 16 values, but occupies 8 bits, so that the block type field actually has 4 bits of the redundant information.

The service signal is not particularly limited in the present disclosure. In some implementations, the service signal is a fixed-length frame signal. For example, the service signal is a FlexE signal, an OSU signal, and an ODU signal. In some implementations, the service signal is a variable-length frame signal.

In the present disclosure, the offset overhead is defined in the service signal, and is used to store the position information of the designated mB/(m+1)B coding block in the mB/(m+1)B coded signal. The receiving terminal can determine the position information of the designated mB/(m+1)B coding block in the mB/(m+1)B coded signal according to the offset overhead, so as to realize the synchronization function of the coding block, and further extract the mB/(m+1)B coded signal from the service signal.

The designated mB/(m+1)B coding block is not particularly limited in the present disclosure. For example, the designated mB/(m+1)B coding block is any mB/(m+1)B coding block in the mB/(m+1)B coded signal, and since the length of the mB/(m+1)B coding block is fixed, if the position information of the designated mB/(m+1)B coding block is determined, the position information of all mB/(m+1)B coding blocks can be calculated.

In the present disclosure, the 64B/66B coded signal is converted into the mB/(m+1)B coded signal, and the mB/(m+1)B coded signal is loaded into the service signal for transmission. Compared with directly loading the 64B/66B coded signal into the service signal, the rate of the service signal is lower, so that the rate of the service signal is reduced. At a receiving terminal, according to the offset overhead stored the position information of the designated mB/(m+1)B coding block in the mB/(m+1)B coded signal in the service signal, the mB/(m+1)B coded signal can be extracted from the service signal, and the mB/(m+1)B coded signal is converted into the 64B/66B coded signal, so that the transmission of the 64B/66B coded signal can be realized, and when the 64B/66B coded signal is recovered according to the mB/(m+1)B coded signal, the transmission rate of the 64B/66B coded signal can also be recovered, so that a high-rate 64B/66B coded signal can be transmitted by a low-rate service signal.

How to transmit the service signal is not particularly limited in the present disclosure. In some implementations, the service signal may be transmitted directly. In some implementations, the service signal may be transmitted indirectly. It should be noted that indirect transmitting means that the service signal is loaded into other signals for transmitting.

In some implementations, the service signal is an ODU signal, and transmitting the service signal includes: transmitting the ODU signal.

How to transmit the ODU signal is not particularly limited in the present disclosure.

In some implementations, the ODU signal is loaded into a payload of a higher-rate ODU signal, and then the higher-rate ODU signal is converted into an optical channel transport unit (OTU) signal, the OTU signal is transmitted in the OTN. For example, a ODU0 signal loading the 64B/65B coded signal is loaded into a payload of a ODU4 signal, the ODU4 signal is converted into a OTU4 signal, and the OTU4 signal is transmitted in the OTN.

In some implementations, the ODU signal is converted into the OTU signal, and the OTU signal is transmitted in the OTN. For example, a ODU2 signal loading the 64B/65B coded signal is converted into a OTU2 signal, and the OTU2 signal is transmitted in the OTN.

In some implementations, the ODU signal is loaded into a payload of a ODUCn signal, and then the ODUCn signal is converted into a OTUCn signal, the OTUCn signal is loaded into other signals for transmitting in the OTN. For example, the ODU4 signal loading the 64B/65B coded signal is loaded into a payload of a ODUC2 signal, the ODUC2 signal is converted into a OTUC2 signal, and the OTUC2 signal is loaded into a flexible optical transport network (FlexO) signal for transmitting in the OTN.

Accordingly, in some implementations, transmitting the ODU signal includes: loading the ODU signal into a high-rate ODU signal, and loading the high-rate ODU signal into a payload of a OTU signal, where a rate of the high-rate ODU signal is greater than that of the ODU signal; or loading the ODU signal into the payload of the OTU signal; transmitting the OTU signal.

For example, the ODU signal is the ODU2 signal, the high-rate ODU signal is the ODU4 signal. For example, the ODU signal is the ODU0 signal, the high-rate ODU signal is the ODU4 signal.

How to load the mB/(m+1)B coded signal into the service signal is not particularly limited in the present disclosure.

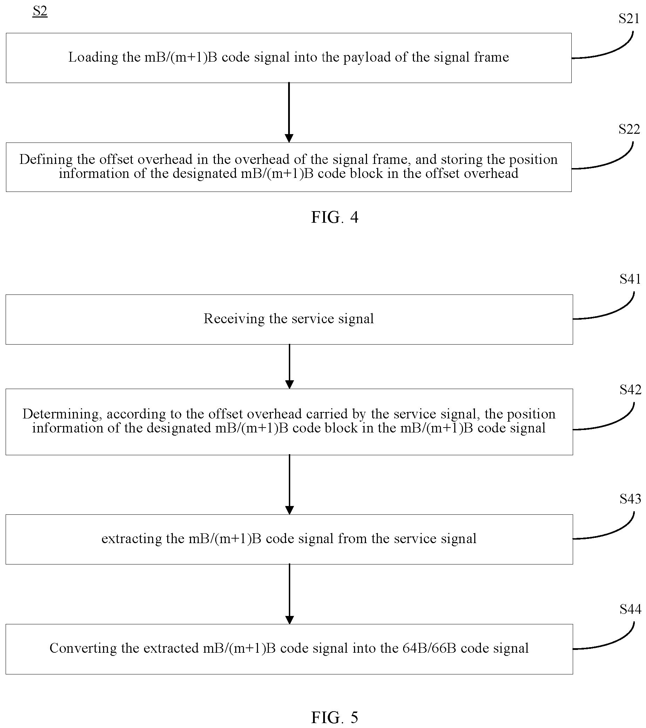

In some implementations, referring to Fig. 4, the service signal is composed of signal frames, the signal frame of the service signal includes an overhead and a payload; loading the mB/(m+1)B coded signal into the service signal includes the following operations S21 to S22.

At operation S21, loading the mB/(m+1)B coded signal into the payload of the signal frame.

At operation S22, defining the offset overhead in the overhead of the signal frame, and storing the position information of the designated mB/(m+1)B coding block in the offset overhead.

In the present disclosure, the designated mB/(m+1)B coding block may be any mB/(m+1)B coding block in the mB/(m+1)B coded signal. The present disclosure does not particularly limit thereto.

In some implementations, the service signal is the ODU signal. As shown in Fig. 1, a ODU signal frame is composed of 4×3824 bytes, which are arranged into 4 rows and 3824 columns, where bytes from 1st column to 16th column are overhead, bytes from 17th column to 3824th column are payload, and the offset overhead may be defined in an overhead of each row of the ODU signal frame, or defined in overhead of several rows in the ODU signal frame. The present disclosure does not particularly limit thereto. In some implementations, one offset overhead corresponds one row of the ODU signal frame, and the offset overhead stores position information of a designated mB/(m+1)B coding block in a payload of the row.

How to store the position information of the designated mB/(m+1)B coding block in the offset overhead is not particularly limited in the present disclosure.

In some implementations, storing the position information of the designated mB/(m+1)B coding block in the offset overhead includes: storing, in the offset overhead, a bit offset value U in the mB/(m+1)B coding block of a first bit of the mB/(m+1)B coded signal located in the payload of the signal frame, where U is an integer and a value range of U is from 1 to m+1.

It should be noted that U represents that the first bit of the mB/(m+1)B coded signal located in the payload of the signal frame of the service signal is located in the Uth bit of the m+1 bits of the mB/(m+1)B coding block. The mB/(m+1)B coding block, where the first bit of the mB/(m+1)B coded signal located in the payload is located, is the designated mB/(m+1)B coding block.

In the present disclosure, when the mB/(m+1)B coded signal is loaded into the service signal, it is possible that all bits in the payload of the signal frame of the service signal are used for loading the mB/(m+1)B coded signal; it is also possible to load the mB/(m+1)B coded signal into the payload of the signal frame of the service signal after padding some padding bits in the mB/(m+1)B coded signal, i.e., the mB/(m+1)B coded signal loaded into the payload of the signal frame includes padding bits and non-padding bits. The present disclosure does not particularly limit thereto.

In some implementations, when the mB/(m+1)B coded signal loaded into the payload of the signal frame includes padding bits and non-padding bits, a mB/(m+1)B coding block in which a first non-padding bit in the payload of the signal frame of the service signal is located is the designated mB/(m+1)B coding block, and U represents that the first non-padding bit is located at an Uth bit in the designated mB/(m+1)B coding block.

How to load the mB/(m+1)B coded signal into the payload of the signal frame is not particularly limited in the present disclosure.

In some implementations, loading the mB/(m+1)B coded signal into the payload of the signal frame includes: loading the mB/(m+1)B coded signal into the payload of the signal frame, where all bits in the payload of the signal frame are used for loading the mB/(m+1)B coded signal, and a rate of the payload of the signal frame is equal to that of the mB/(m+1)B coded signal.

In some implementations, loading the mB/(m+1)B coded signal into the payload of the signal frame includes: loading the mB/(m+1)B coded signal into non-padding bits in the payload of the signal frame, where the payload of the signal frame includes a padding bit and a non-padding bit, and a rate of the non-padding bit in the payload of the signal frame is equal to that of the mB/(m+1)B coded signal.

In some implementations, the service signal is the ODU signal. How to store the position information of the designated mB/(m+1)B coding block in the offset overhead when the mB/(m+1)B coding block is loaded into the ODU signal is not particularly limited in the present disclosure.

In some implementations, storing the position information of the designated mB/(m+1)B coding block in the offset overhead includes: storing distance information of the designated mB/(m+1)B coding block with respect to a reference position in the ODU signal frame in the offset overhead.

The reference position in the ODU signal frame and the designated mB/(m+1)B coding block are not particularly limited in the present disclosure.

In some implementations, the reference position is a start position of the payload of the ODU signal frame, the designated mB/(m+1)B coding block is a first complete mB/(m+1)B coding block in the payload of the ODU signal frame, the distance information of the designated mB/(m+1)B coding block with respect to the reference position includes: a number of bits separating a start position of the first complete mB/(m+1)B coding block in the payload of the ODU signal frame from the start position of the payload of the ODU signal frame, where the complete mB/(m+1)B coding block is an mB/(m+1)B coding block of which m+1 bits are all positioned in the payload of the ODU signal frame.

In some implementations, as shown in Fig. 1, the ODU signal frame is composed of 4×3824 bytes, which are arranged into 4 rows and 3824 columns, where bytes from 1st column to 16th column are overhead, bytes from 17th column to 3824th column are payload, one offset overhead corresponds to one row of the ODU signal frame, the reference position is a start position of the payload of the row, and the offset overhead stores a number of bits separating a start position of a first complete mB/(m+1)B coding block in the payload of the row from the start position of the payload in the row.

For example, the mB/(m+1)B coded signal is the 64B/65B coded signal, one offset overhead corresponds to one row of the ODU signal frame, the designated mB/(m+1)B coded signal is the first complete 64B/65B coding block in the payload of the row, the reference position is the start position of the payload of the row, a 64B/65B coding block before the first complete 64B/65B coding block has j bits in the payload of the row, and a value j is stored in the offset overhead of the row, which indicates that the start position of the first complete 64B/65B coding block of the row is j bits apart from the start position of the payload of the row. And j is a positive integer.

For example, the mB/(m+1)B coded signal is the 64B/65B coded signal, one offset overhead corresponds to one row of the ODU signal frame, the designated mB/(m+1)B coded signal is i-th complete 64B/65B coding block in the payload of the row, the reference position is the start position of the payload of the row, a first incomplete 64B/65B coding block in the payload of the row has j bits in the payload of the row, and a value j may be stored in the offset overhead of the row, which indicates that a start position of the i-th complete 64B/65B coding block of the row is j+(i-1)×65 bits apart from the start position of the payload of the row; the offset overhead of the row may also store the value j+(i-1)×65, which indicates that the start position of the i-th complete 64B/65B coding block of the row is j+(i-1)×65 bits apart from the start position of the payload of the row. And i is a positive integer.

How to convert the 64B/66B coded signal into the mB/(m+1)B coded signal is not particularly limited in the present disclosure.

In some implementations, the mB/(m+1)B coded signal is a 64B/65B coded signal, the 64B/65B coded signal is composed of 64B/65B coding blocks, and a length of the 64B/65B coding block is 65 bits; converting the 64B/66B coded signal into the 64B/65B coded signal includes: taking 65 bits of specific positions from the 64B/66B coding block to compose the 64B/65B coding block, so as to convert the 64B/66B coded signal into the 64B/65B coded signal.

How to take 65 bits of specific positions from the 64B/66B coding block to compose the 64B/65B coding block is not particularly limited in the present disclosure.

In some implementations, last 65 bits of the 64B/66B coding block are taken to compose the 64B/65B coding block.

In some implementations, a second bit of the 64B/66B coding block is removed, and the 64B/65B coding block is composed of the remaining 65 bits.

In some implementations, the mB/(m+1)B coded signal is a 256B/257B coded signal, the 256B/257B coded signal is composed of 256B/257B coding blocks, and a length of the 256B/257B coding block is 257 bits; converting the 64B/66B coded signal into the 256B/257B coded signal includes: converting four consecutive 64B/66B coding blocks into one 256B/257B coding block, so as to convert the 64B/66B coded signal into the 256B/257B coded signal.

In some implementations, converting four consecutive 64B/66B coding blocks into one 256B/257B coding block includes: in response to first two bits of each of the four 64B/66B coding blocks being 01, setting a first bit of the 256B/257B coding block as 1, and sequentially splicing last 64 bits of respective 64B/66B coding blocks as last 256 bits of the 256B/257B coding block; in response to first two bits of at least one 64B/66B coding block of the four 64B/66B coding blocks being 10, setting the first bit of the 256B/257B coding block as 0, and sequentially taking second bits of the four 64B/66B coding blocks as second to fifth bits of the 256B/257B coding block, and sequentially splicing last 64 bits of respective 64B/66B coding blocks as a bit block including 256 bits; removing [5+64×(C-1)]-th to [8+64×(C-1)]-th bits from the bit block, and taking the remaining 252 bits as last 252 bits of the 256B/257B coding block, where C represents a position of a first 64B/66B coding block having the first two bits as 10 in the four 64B/66B coding blocks, and C is an integer with a value from 1 to 4.

In some implementations, the service signal is an ODU signal. How to define the offset overhead in the overhead of the ODU signal frame is not particularly limited in the present disclosure.

In some implementations, the mB/(m+1)B coded signal is the 64B/65B coded signal; defining the offset overhead in the overhead of the ODU signal frame includes: defining the offset overhead in at least one of an overhead of a first row, an overhead of a second row, an overhead of a third row, or an overhead of a fourth row of the ODU signal frame, where the offset overhead is located at a 16th column of the ODU signal frame, and a length of the offset overhead is 8 bits.

In some implementations, the mB/(m+1)B coded signal is the 256B/257B coded signal; defining the offset overhead in the overhead of the ODU signal frame includes: defining the offset overhead in at least one of an overhead of a first row, an overhead of a second row, or an overhead of a third row of the ODU signal frame, where the offset overhead is located at a 15th column and a 16th column of the ODU signal frame, and a length of the offset overhead is 9 bits.

In the present disclosure, for one byte in the ODU signal frame, bit 1 is defined as a Most Significant Bit (MSB), bit 8 is defined as a Least Significant Bit (LSB), and for offset overheads in the overhead of the first row, the overhead of the second row, the overhead of the third row, and the overhead of the fourth row, a LSB in the 15th column in the ODU signal corresponds to an MSB in the 9 bits of the offset overhead, and a LSB in the 16th column in the ODU signal corresponds to an LSB in the 9 bits of the offset overhead.

In some implementations, defining the offset overhead in the overhead of the ODU signal frame further includes: defining the offset overhead in the overhead of the fourth row of the ODU signal frame, where the offset overhead in the overhead of the fourth row is located in the 16th column of the ODU signal frame, and the length of the offset overhead in the overhead of the fourth row is 8 bits.

It should be noted that the offset overhead is defined in the overhead of the fourth row at the 16th column of the ODU signal frame and the length of the offset overhead is 8 bits, because the LSB of the 15th column in the ODU signal in related standards is already occupied, thereby facilitating the compatibility with the related standards.

In the present disclosure, a value of position information of the fourth row is from 0 to 255, when the value of the position information of the fourth row is 0, it indicates that a first 256B/257B coding block in a payload of the fourth row has unknown number of bits, or 256 or 257 bits in the payload of the fourth row; when the value of the position information of the fourth row is 1 to 255, it indicates that a number of bits of the first 256B/257B coding block in the payload of the fourth row.

In the present disclosure, the receiving terminal can extract the mB/(m+1)B coded signal from the service signal according to the offset overhead carried in the service signal and storing the position information of the designated mB/(m+1)B coding block in the mB/(m+1)B coded signal, and convert the mB/(m+1)B coded signal into the 64B/66B coded signal.

Accordingly, in some implementations, referring to Fig. 5, the data transmission method further includes the following operations S41 to S44.

At operation S41, receiving the service signal.

At operation S42, determining, according to the offset overhead carried in the service signal, the position information of the designated mB/(m+1)B coding block in the mB/(m+1)B coded signal.

At operation S43, extracting the mB/(m+1)B coded signal from the service signal.

At operation S44, converting the extracted mB/(m+1)B coded signal into the 64B/66B coded signal.

In the present disclosure, the receiving terminal can extract the mB/(m+1)B coded signal from the service signal according to the offset overhead carried in the service signal and storing the position information of the designated mB/(m+1)B coding block in the mB/(m+1)B coded signal, and convert the mB/(m+1)B coded signal into the 64B/66B coded signal, thereby realizing the transmission of the 64B/66B coded signal, and when the 64B/66B coded signal is recovered according to the mB/(m+1)B coded signal, the transmission rate of the 64B/66B coded signal can also be recovered.

In some implementations, the service signal is the ODU signal. Corresponding to the transmission terminal, receiving, by the receiving terminal, the OTU signal includes: receiving the OTU signal; extracting a high-rate ODU signal from the OTU signal, and extracting the ODU signal from the high-rate ODU signal, where a rate of the high-rate ODU signal is greater than that of the OTU signal; or, extracting the ODU signal from the OTU signal.

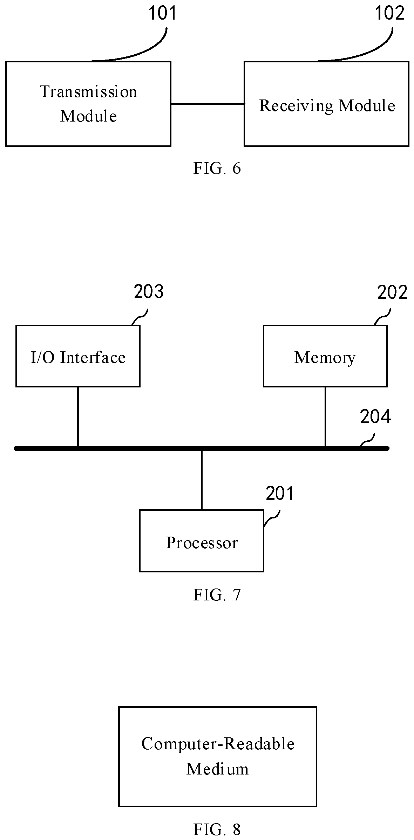

In a second aspect, referring to Fig. 6, the present disclosure provides a data transmission apparatus, including: a transmission module 101 configured to convert a 64B/66B coded signal into a mB/(m+1)B coded signal, where the 64B/66B coded signal is composed of 64B/66B coding blocks, the mB/(m+1)B coded signal is composed of mB/(m+1)B coding blocks, m is an integer greater than or equal to 64; load the mB/(m+1)B coded signal into a service signal, where the service signal carries an offset overhead, and the offset overhead stores position information of a designated mB/(m+1)B coding block in the mB/(m+1)B coded signal; and transmit the service signal; and a receiving module 102 configured to receive the service signal; determine, according to the offset overhead carried in the service signal, the position information of the designated mB/(m+1)B coding block in the mB/(m+1)B coded signal; extract the mB/(m+1)B coded signal from the service signal; and convert the extracted mB/(m+1)B coded signal into the 64B/66B coded signal.

In a third aspect, referring to Fig. 7, the present disclosure provides an electronic device, including: at least one processor 201; a memory 202 having at least one program stored thereon, the at least one program, executed by the at least one processor, causes the at least one processor to implement the data transmission method described in the first aspect of the present disclosure; at least one I/O interface 203 connected between the processor 201 and the memory 202 and configured to implement information interaction between the processor 201 and the memory 202.

The processor 201 is a device having a capability of processing data, includes, but is not limited to, a Central Processing Unit (CPU), and the like; the memory 202 is a device having a capability of storing data, includes, but is not limited to, a random access memory (RAM, in particular, SDRAM, DDR, and the like), a read only memory (ROM), an electrically erasable programmable read only memory (EEPROM), and a FLASH; the I/O interface (read/write interface) 203 is connected between the processor 201 and the memory 202, enables to implement information interaction between the processor 201 and the memory 202, and includes, but is not limited to, a data Bus, and the like.

In some implementations, the processor 201, the memory 202, and the I/O interface 203 are connected together through a bus 204, and are further connected to other components of a computing device.

In a fourth aspect, referring to Fig. 8, the present disclosure provides a computer-readable medium having a computer program stored thereon, the computer program, executed by a processor, causes the processor to implement the data transmission method described in the first aspect of the present disclosure.

In order to enable those skilled in the art to more clearly understand the technical solution provided by the present disclosure, the technical solution provided in the present disclosure are described in detail below by specific examples.

### Example I

A 64B/66B coded signal composed of 64B/66B coding blocks and being a signal with a fixed rate is converted into a mB/(m+1)B coded signal, m is an integer greater than or equal to 64, the mB/(m+1)B coded signal is composed of mB/(m+1)B coding blocks, and the mB/(m+1)B coded signal is loaded into a payload of an ODU signal, so that a rate of the mB/(m+1)B coded signal is equal to that of the payload of the ODU signal. An offset overhead is defined in an overhead of the ODU signal, a start position information of a designated mB/(m+1)B coding block in the payload of the ODU signal is stored in the offset overhead, the ODU signal is loaded into a payload of an OTU signal, and the OTU signal is transmitted in the OTN.

In the Example, the 64B/66B coded signal may be transmitted in the OTN, and since the 64B/66B coded signal is converted into the mB/(m+1)B coded signal during transmission, compared with the 64B/66B coded signal directly loaded into the payload of the ODU signal, a rate of the ODU signal is lower, so that a rate of the OTU signal can be reduced. Since the 64B/66B coded signal is a fixed-rate signal, the rate is reduced by a fixed scaling factor in a process of converting the 64B/66B coded signal into the mB/(m+1)B coded signal, the rate of the mB/(m+1)B coded signal can follow the rate of the 64B/66B coded signal. Since a rate of the payload of the ODU signal is equal to that of the mB/(m+1)B coded signal, and rate-transparent transmission of the ODU signal can be ensured when the ODU signal is transmitted in the OTN, so that the rate of the 64B/66B coded signal can be recovered when the 64B/66B coded signal is finally recovered from the payload of the ODU signal.

### Example II

In the Example II, the mB/(m+1)B coded signal being a 64B/65B coded signal is illustrated as an example.

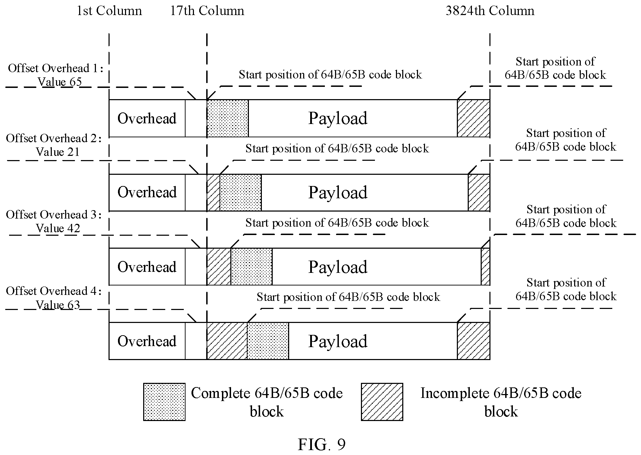

A 2-bit synchronization bits in a 64B/66B coding block is converted into 1 bit, i.e., synchronization bits 01 are converted into 0, synchronization bits 10 are converted into 1. Content of last 64 bits in the 64B/66B coding block remains unchanged, so that the 64B/66B coding block can be converted into a 64B/65B coding block, the 64B/66B coded signal is converted into the 64B/65B coded signal, and the 64B/65B coded signal is loaded into a payload of a ODU signal, so that a rate of the payload of the ODU signal is equal to that of the 64B/65B coded signal. There are four offset overheads defined in a payload of an ODU signal frame, i.e., offset overhead 1, offset overhead 2, offset overhead 3 and offset overhead 4, respectively. As shown in Fig. 9, the offset overhead is located in a 16th column of the ODU signal frame, a length of each offset overhead is one byte, a function of the offset overhead is indicating a number of bits of a first 64B/65B coding block starting from 17th column in the row. One 64B/65B coding block includes 65 bits, the 65 bits may be all located in a payload of a certain row, and the 64B/65B coding block is called as a complete 64B/65B coding block; a part of the 65 bits of one 64B/65B coding block may be located in a payload of a certain row, and another part of the 65 bits may be located in a payload of a next row, and the 64B/65B coding block is called an incomplete 64B/65B coding block. In Fig. 9, in a payload of a first row, a first 64B/65B coding block has 65 bits located in the first row, i.e., one complete 64B/65B coding block is located in a start position of the first row and 17th column, so a value of the offset overhead 1 is 65; in a payload of a second row, a first 64B/65B coding block has 21 bits located in the second row, so a value of the offset overhead 2 is 21; in a payload of a third row, a first 64B/65B coding block has 42 bits located in the third row, so a value of the offset overhead 3 is 42; in a payload of a fourth row, a first 64B/65B coding block has 63 bits located in the fourth row, so a value of the offset overhead 4 is 63. When extracting the 64B/65B coded signal from the ODU signal, according to the offset overhead, it may be determined how many bits of a first 64B/65B coding block extracted from a payload of a n-th row of the ODU signal are located in the row, so that a start position of a next 64B/65B coding block can be found, as long as a start position of one 64B/65B coding block is determined, and data in the ODU signal is not destroyed, it may be pre-calculated how many bits of a first 64B/65B coding block in a payload of each row are located in the row, and a calculation result may be compared with the offset overhead of the row, if the calculation result is not consistent with the offset overhead, the offset overhead n is considered to be destroyed, and the calculation result is used as an actual start position, if the calculation result is not consistent with the offset overhead n in a plurality of consecutive rows, a value of the offset overhead n is used to position a start position of the 64B/65B coding block of a current row. After determining the start position of the 64B/65B coding block, the 64B/65B coding block can be converted into the 64B/66B coding block, and the 64B/66B coded signal can be recovered finally, thereby realizing signal transmission of the 64B/66B coded signal through the ODU signal, and meanwhile, reducing a rate of the ODU signal through converting the 64B/66B coding block into the 64B/65B coding block. In the Example, the ODU signal is loaded into an OTU signal before being transmitted in the OTN.

### Example III

In the Example III, the mB/(m+1)B coded signal being a 256B/257B coded signal is illustrated as an example.

Four consecutive 64B/66B coding block are converted into one 256B/257B coding block, and in specific implementations, in response to first two bits of each of the four 64B/66B coding blocks being 01, setting a first bit of the 256B/257B coding block as 1, and sequentially splicing last 64 bits of respective 64B/66B coding blocks as last 256 bits of the 256B/257B coding block; in response to first two bits of at least one 64B/66B coding block of the four 64B/66B coding blocks being 10, setting the first bit of the 256B/257B coding block as 0, and sequentially taking second bits of the four 64B/66B coding blocks as second to fifth bits of the 256B/257B coding block, and sequentially splicing last 64 bits of respective 64B/66B coding blocks as a bit block including 256 bits; removing [5+64×(C-1)]-th to [8+64×(C-1)]-th bits from the bit block, and taking the remaining 252 bits as last 252 bits of the 256B/257B coding block, where C represents a position of a first 64B/66B coding block having the first two bits as 10 in the four 64B/66B coding blocks, and C is an integer with a value from 1 to 4, so as to convert the 64B/66B coded signal into the 256B/257B coded signal. The 256B/257B coded signal is loaded into a payload of the ODU signal, so that a rate of the payload of the ODU signal is equal to that of the 256B/257B coded signal. There are four offset overheads defined in the payload of an ODU signal frame, i.e., offset overhead 1, offset overhead 2, offset overhead 3 and offset overhead 4, respectively. The offset overhead 1 includes 9 bits, and is located in a bit 8 of the first row and 16th column and the first row and 17th column. For one byte in the ODU signal frame, bit 1 is defined as a MSB, bit 8 is defined as a LSB, in the 9 bits corresponding to the offset overhead 1, a LSB of the first row and 16th column corresponds to a MSB in the 9 bits, a LSB of the first row and 17th column corresponds to a LSB in the 9 bits. A value of the offset overhead 1 is 1 to 257, which indicates how many bits of a first 256B/257B coding block in a payload of a first row is located in the payload of the first row, the value 257 indicates that all bits of a first 256B/257B coding block in the payload of the first row are all located in the payload of the first row and a first bit of the first 256B/257B coding block is located in the MSB of the first row and 17th column, the value p indicates that a first 256B/257B coding block in the payload of the first row has p bits located in the payload of the first row, p is an integer with a value range of 1 to 257; definitions of the offset overhead 2 and the offset overhead 3 are the same as that of the offset overhead 1, lengths of the offset overhead 2 and the offset overhead 3 are all 9 bits, and value ranges are all from 1 to 257. The offset overhead 2 indicates how many bits of a first 256B/257B coding block in a payload of a second row are located in the payload of the second row, and the offset overhead 3 indicates how many bits of a first 256B/257B coding block in a payload of a third row are located in the payload of the third row. The offset overhead 4 has a length of 8 bits, is located in fourth row and 16th column, and has a value from 0 to 255. If the value is 0, it indicates that a first 256B/257B coding block in a payload of the fourth row may have unknown number of bits located in the payload of the fourth row, or may have 256 or 257 bits located in the payload of the fourth row, and a start position of the 256B/257B coding block in the fourth row is determined according to above calculation results. If the value of the offset overhead 4 is 1 to 255, it indicates that the first 256B/257B coding block in the payload of the fourth row may have q bits located in the payload of the fourth row, q is content of the offset overhead 4. Other processing procedures of the Example III is the same as that of the Example II, except that 64B/65B coding is changed as 256B/257B coding, and meanwhile the definitions of the offset overheads are different. Function of the offset overhead in the Example III is the same as that in the Example II, which indicates how many bits of a first mB/m+1B coding block in a payload of a certain row are located in the certain row.

It should be understood by those of ordinary skill in the art that all or some of the operations in the method, system, the functional modules/components in the apparatus described above may be implemented as software, firmware, hardware, or suitable combinations thereof. In a hardware implementation, the division between the functional modules/components stated above does not correspond to the division of physical components; for example, one physical component may have a plurality of functions, or one function or operation may be performed through a cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, the computer-readable medium may include computer storage medium (or non-transitory medium) and communication medium (or transitory medium). As known to those skilled in the art, the computer storage medium includes volatile/nonvolatile or removable/non-removable medium used in any method or technology for storing information (such as computer-readable instructions, data structures, program modules and other data). The computer storage medium includes, but is not limited to, RAM, ROM, EEPROM, a flash memory or other memory techniques, CD-ROM, a Digital Video Disk (DVD) or other optical discs, magnetic cassettes, magnetic tapes, magnetic disks or other magnetic storage devices, or any other medium which can be used to store the desired information and can be accessed by a computer. In addition, as known to those skilled in the art, the communication medium generally includes computer-readable instructions, data structures, program modules or other data in a modulated data signal, such as a carrier wave or other transmission mechanism, and may include any information delivery medium.

The present disclosure describes the exemplary embodiments, and although specific terms are employed, they are used and should only be interpreted in a generic and descriptive meaning and not for purposes of a limitation. **In** some examples, it is apparent to those skilled in the art that features, characteristics and/or elements described in connection with specific embodiments may be used alone or in combination with features, characteristics and/or elements described in connection with other embodiments, unless explicitly stated otherwise. Therefore, it should be understood by those skilled in the art that various changes in form and details may be made without departing from the scope of the present disclosure as set forth in the appended claims.

## Claims

1. A data transmission method, comprising:
converting a 64B/66B coded signal into a mB/(m+1)B coded signal, wherein the 64B/66B coded signal is composed of 64B/66B coding blocks, the mB/(m+1)B coded signal is composed of mB/(m+1)B coding blocks, m is an integer greater than or equal to 64;
loading the mB/(m+1)B coded signal into a service signal, wherein the service signal carries an offset overhead, and the offset overhead stores position information of a designated mB/(m+1)B coding block in the mB/(m+1)B coded signal;
transmitting the service signal.

2. The data transmission method of claim 1, wherein the service signal is composed of signal frames, the signal frame of the service signal comprises an overhead and a payload, loading the mB/(m+1)B coded signal into the service signal comprises:
loading the mB/(m+1)B coded signal into the payload of the signal frame;
defining the offset overhead in the overhead of the signal frame, and storing the position information of the designated mB/(m+1)B coding block in the offset overhead.

3. The data transmission method of claim 2, wherein storing the position information of the designated mB/(m+1)B coding block in the offset overhead comprises:
storing, in the offset overhead, a bit offset value U in the mB/(m+1)B coding block of a first bit of the mB/(m+1)B coded signal located in the payload of the signal frame, wherein U is an integer and a value range of U is from 1 to m+1.

4. The data transmission method of claim 2, wherein loading the mB/(m+1)B coded signal into the payload of the signal frame comprises:
loading the mB/(m+1)B coded signal into the payload of the signal frame, wherein all bits in the payload of the signal frame are used for loading the mB/(m+1)B coded signal, and a rate of the payload of the signal frame is equal to that of the mB/(m+1)B coded signal.

5. The data transmission method of claim 2, wherein loading the mB/(m+1)B coded signal into the payload of the signal frame comprises:
loading the mB/(m+1)B coded signal into a non-padding bit in the payload of the signal frame, wherein the payload of the signal frame comprises a padding bit and a non-padding bit, and a rate of the non-padding bit in the payload of the signal frame is equal to that of the mB/(m+1)B coded signal.

6. The data transmission method of any one of claims 1 to 5, wherein the mB/(m+1)B coded signal is a 64B/65B coded signal, the 64B/65B coded signal is composed of 64B/65B coding blocks, and a length of the 64B/65B coding block is 65 bits,
converting the 64B/66B coded signal into the 64B/65B coded signal comprises:
taking 65 bits of specific positions from the 64B/66B coding block to compose the 64B/65B coding block, so as to convert the 64B/66B coded signal into the 64B/65B coded signal.

7. The data transmission method of claim 6, wherein taking the 65 bits of specific positions from the 64B/66B coding block to compose the 64B/65B coding block comprises:
taking last 65 bits of the 64B/66B coding block to compose the 64B/65B coding block; or
removing a second bit of the 64B/66B coding block and composing the 64B/65B coding block by the remaining 65 bits.

8. The data transmission method of any one of claims 1 to 5, wherein the mB/(m+1)B coded signal is a 256B/257B coded signal, the 256B/257B coded signal is composed of 256B/257B coding blocks, and a length of the 256B/257B coding block being 257 bits,
converting the 64B/66B coded signal into the 256B/257B coded signal comprises:
converting four consecutive 64B/66B coding blocks into one 256B/257B coding block, so as to convert the 64B/66B coded signal into the 256B/257B coded signal.

9. The data transmission method according to claim 8, wherein converting four consecutive 64B/66B coding blocks into one 256B/257B coding block comprises:
in response to first two bits of each of the four 64B/66B coding blocks being 01, setting a first bit of the 256B/257B coding block as 1, and sequentially splicing last 64 bits of respective 64B/66B coding blocks as last 256 bits of the 256B/257B coding block;
in response to first two bits of at least one 64B/66B coding block of the four 64B/66B coding blocks being 10, setting the first bit of the 256B/257B coding block as 0, and sequentially taking second bits of the four 64B/66B coding blocks as second to fifth bits of the 256B/257B coding block, and sequentially splicing last 64 bits of respective 64B/66B coding blocks as a bit block comprising 256 bits; removing [5+64×(C-1)]-th to [8+64×(C-1)]-th bits from the bit block, and taking the remaining 252 bits as last 252 bits of the 256B/257B coding block, wherein C represents a position of a first 64B/66B coding block having the first two bits as 10 in the four 64B/66B coding blocks, and C is an integer with a value from 1 to 4.

10. The data transmission method of any one of claims 1 to 5, wherein the data transmission method further comprises:
receiving the service signal;
determining, according to the offset overhead carried in the service signal, the position information of the designated mB/(m+1)B coding block in the mB/(m+1)B coded signal;
extracting the mB/(m+1)B coded signal from the service signal;
converting the extracted mB/(m+1)B coded signal into the 64B/66B coded signal.

11. A data transmission apparatus, comprising:
a transmission module configured to convert a 64B/66B coded signal into a mB/(m+1)B coded signal, wherein the 64B/66B coded signal is composed of 64B/66B coding blocks, the mB/(m+1)B coded signal is composed of mB/(m+1)B coding blocks, m is an integer greater than or equal to 64; load the mB/(m+1)B coded signal into a service signal, wherein the service signal carries an offset overhead, and the offset overhead stores position information of a designated mB/(m+1)B coding block in the mB/(m+1)B coded signal; and transmit the service signal; and
a receiving module configured to receive the service signal; determine, according to the offset overhead carried in the service signal, the position information of the designated mB/(m+1)B coding block in the mB/(m+1)B coded signal; extract the mB/(m+1)B coded signal from the service signal; and convert the extracted mB/(m+1)B coded signal into the 64B/66B coded signal.

12. An electronic device, comprising:
at least one processor;
a memory having at least one program stored thereon, the at least one program, executed by the at least one processor, causes the at least one processor to implement the data transmission method of any one of claims 1 to 10.

13. A computer-readable medium having a computer program stored thereon, the computer program, executed by a processor, causes the processor to implement the data transmission method of any one of claims 1 to 10.
